# EUROPEAN PATENT SPECIFICATION

(11) **EP 1 950 112 B1**
(45) Date of publication and mention of the grant of the patent: **12.08.2009**
(21) Application number: 07024012.2
(22) Date of filing: 11.12.2007
(51) Int. Cl.: B60T 8/40

(54) **Brake system**
Bremssystem
Système de freinage

(30) Priority: 16.01.2007 JP 2007006984
(43) Date of publication of application: 30.07.2008
(73) Proprietor: HONDA MOTOR CO., LTD., Tokyo 107-8556 (JP)
(72) Inventor: Ohnishi, Takaaki, Wako-shi, Saitama, 351-0193 (JP)
(74) Representative: Herzog, Markus

(56) References cited:
- EP-A- 1 219 516
- WO-A-00/68053
- WO-A-95/29830
- DE-A1- 3 424 912
- JP-A- 4 362 454
- US-A- 4 756 391

## Description

### BACKGROUND OF THE INVENTION

### FIELD OF THE INVENTION

The present invention relates to a brake system comprising: a master cylinder for generating a brake fluid pressure by braking operation by a driver; a slave cylinder for generating a brake fluid pressure by an actuator operated by an electric motor; a wheel cylinder for braking a wheel by means of the brake fluid pressure generated by the master cylinder or the slave cylinder; a first fluid passage connecting the master cylinder and the slave cylinder to each other; and a shutoff valve capable of shutting off communication of the first fluid passage.

### DESCRIPTION OF THE RELATED ART

Japanese Patent No. 3205570 (corresponding to JP 04362454 A) discloses a brake system of the type referred to as a brake by wire (BBW) brake system, which converts a brake operation of a driver into an electrical signal used to operate an electrical fluid pressure generator (slave cylinder), and operates a wheel cylinder by brake fluid pressure generated by the slave cylinder.

The electrical fluid pressure generating means (slave cylinder) of the BBW type brake system generates a brake fluid pressure by an electric motor driving a piston, which is slidably fitted in the cylinder, to advance and retreat. However, in this brake system, the piston has a problem of stroke loss between the time the electric motor begins to advance the piston and the time a brake fluid pressure is generated in the cylinder, resulting in a low response in generating a braking force.

The stroke loss is generated, for example, by the causes described below. In a side port type slave cylinder, at the moment a cup seal provided on the piston passes the relief port leading to a reservoir, a brake fluid pressure is generated in the cylinder. However, the brake fluid pressure is not generated between the time the cup seal is in an initial position and the time the cup seal advances from the initial position to pass the relief port, so that stroke loss is provided during this process.

Also, in a center port type slave cylinder in which a valve is arranged in a through hole penetrating the center of the piston in the front/rear direction, a brake fluid pressure is generated in the cylinder at the moment when the piston advances from the initial position to close the valve. However, the brake fluid pressure is not generated between the time the piston begins to advance and the time the valve is closed, so that stroke loss is provided during this process.

In order to minimize the stroke loss and improve the response in generating a braking force, the initial position of the piston must be controlled precisely so that the cup seal immediately passes the relief port when the piston begins to advance, or so that the valve is immediately closed when the piston begins to advance from the initial position. For this purpose, conventionally, it is necessary to conduct troublesome control such that the piston having retreated once to the retreat limit after the completion of braking is advanced by the electric motor and stopped at the appropriate initial position.

EP-A-1 219 516 discloses a brake system in accordance with the preamble of claim 1. Disadvantageous are the different shapes of the slave cylinder pistons, the risk of tilting of the pistons and the complex sealing arrangement.

WO 95/29830 A shows a similar brake system but the seal on the piston is formed by an O-ring.

### SUMMARY OF THE INVENTION

The present invention has been made in view of the above-described circumstances, and it is an object of the present invention to minimize stroke loss of a piston of a slave cylinder without need of adjusting the initial position of the piston while reliably run short of brake fluid, while overcoming the disadvantages of the prior-art.

To achieve the above object, according to a first aspect of the present invention, there is provided a brake system in accordance with claim 1.

With the first aspect of the present invention, the piston, which is slidably fitted in the cylinder body of the slave cylinder and driven to advance and retreat by the actuator, includes the cup seal; the first fluid passage provides communication between the master cylinder and the slave cylinder; the shutoff valve is arranged in the first fluid passage; the second fluid passage branches from the first fluid passage on a side of the master cylinder with respect to the shutoff valve, and communicates with the cylinder body at a position in front of the advance limit of the cup seal. Therefore, it is possible to minimize the stroke loss from the time the piston begins to advance to the time the brake fluid pressure is generated, thereby improving the response in generating a braking force without adjusting the initial position of the piston by controlling the actuator each time the piston operates.

According to a second aspect of the present invention, in addition to the first aspect, the brake system further comprises an anti-lock braking system which is arranged between the slave cylinder and a plurality of wheel cylinders and which can individually control a braking force generated by each of the wheel cylinders.

With the second aspect of the present invention, because the anti-lock braking system is arranged between the slave cylinder and the plurality of wheel cylinders to individually control the braking force generated by each of the wheel cylinders, locking of the wheels is suppressed to reduce the braking distance.

According to a third aspect of the present invention, in addition to the second aspect, the shutoff valve is closed at least when the anti-lock braking system operates.

With the third aspect of the present invention, because the shutoff valve is arranged in the first fluid passage connecting the master cylinder and the slave cylinder to each other, and is closed at least when the anti-lock braking system operates, the change in fluid pressure caused by the operation of the anti-lock braking system is prevented from being transmitted to the master cylinder as a kickback.

According to a fourth aspect of the present invention, in addition to the first aspect, the brake system further comprises a stroke simulator communicating with the master cylinder via a reaction force permission valve which is opened when the operation of the slave cylinder is normal and closed when the operation of the slave cylinder is abnormal.

With the fourth aspect of the present invention, the stroke simulator is allowed to communicate with the master cylinder via the reaction force permission valve. Therefore, when the operation of the slave cylinder is normal, the reaction force permission valve is opened to allow the function of the stroke simulator, whereby the reaction force is generated against the operation of the master cylinder. Also, when the operation of the slave cylinder is abnormal, the reaction force permission valve is closed to terminate the function of the stroke simulator, whereby the brake fluid pressure generated by the master cylinder is transmitted to the wheel cylinder without being absorbed by the stroke simulator.

Front cup seals 65A and 65B in an embodiment correspond to the cup seal in the present invention, fluid passages Pa, Pb, Qa and Qb in the embodiment correspond to the first fluid passage in the present invention, and fluid passages Pf and Qf in the embodiment correspond to the second fluid passage in the present invention.

The above-mentioned object, other objects, characteristics, and advantages of the present invention will become apparent from a preferred embodiment, which will be described in detail below by reference to the attached drawings.

### BRIEF DESCRIPTION OF THE DRAWINGS

FIG. 1 is a fluid-pressure circuit diagram of a vehicle brake system according to an exemplary embodiment of the preset invention under normal operation;

FIG. 2 is a fluid-pressure circuit diagram of the vehicle brake system of FIG. 1 under abnormal operation; and

FIG. 3 is an enlarged view of a slave cylinder in FIG. 1.

### DESCRIPTION OF THE PRESENT EXEMPLARY EMBODIMENT

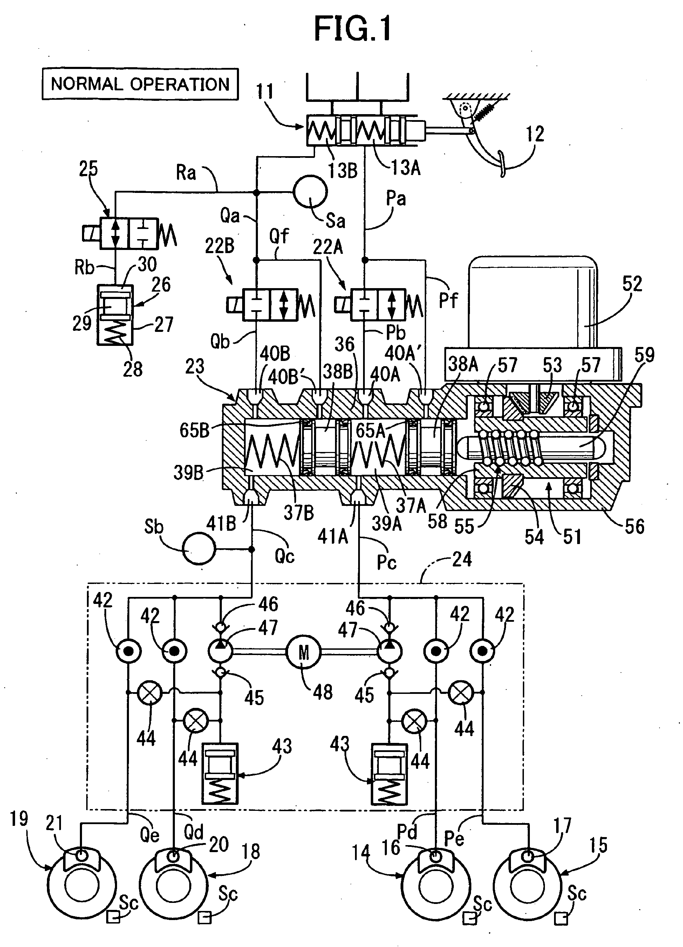

An exemplary embodiment of the present invention will be described with reference to FIGS. 1 to 3.

As shown in FIG. 1, a tandem master cylinder 11 has two fluid pressure chambers 13A and 13B which output brake fluid pressure according to a force applied to a brake pedal 12 by a driver treading on the brake pedal 12. One of the fluid pressure chambers 13A is connected to wheel cylinders 16 and 17 of disc brake devices 14 and 15 for braking, for example, a left front wheel and a right rear wheel through fluid passages Pa, Pb, Pc, Pd, and Pe. The other fluid pressure chamber 13B is connected to wheel cylinders 20 and 21 of disc brake devices 18 and 19 for braking, for example, a right front wheel and a left rear wheel through fluid passages Qa, Qb, Qc, Qd, and Qe.

A shutoff valve 22A, which is a normally open solenoid valve, is provided between the fluid passages Pa and Pb. A shutoff valve 22B, which is a normally open solenoid valve, is provided between the fluid passages Qa and Qb. A slave cylinder 23 is provided between the fluid passages Pb, Qb and the fluid passages Pc, Qc. An anti-lock brake system (ABS) 24 is provided between the fluid passages Pc, Qc and the fluid passages Pd, Pe; Qd, Qe.

A reaction force permission valve 25, which is a normally closed solenoid valve, is connected between a fluid passage Ra branching from the fluid passage Qa and a fluid passage Rb. A stroke simulator 26 is connected to the fluid passage Rb. The stroke simulator 26 has a cylinder 27 and a piston 29 slidably fitted in the cylinder 27 while being urged by a spring 28. A fluid chamber 30, formed on the side of the piston 29 opposite from the spring 28, communicates with the fluid passage Rb.

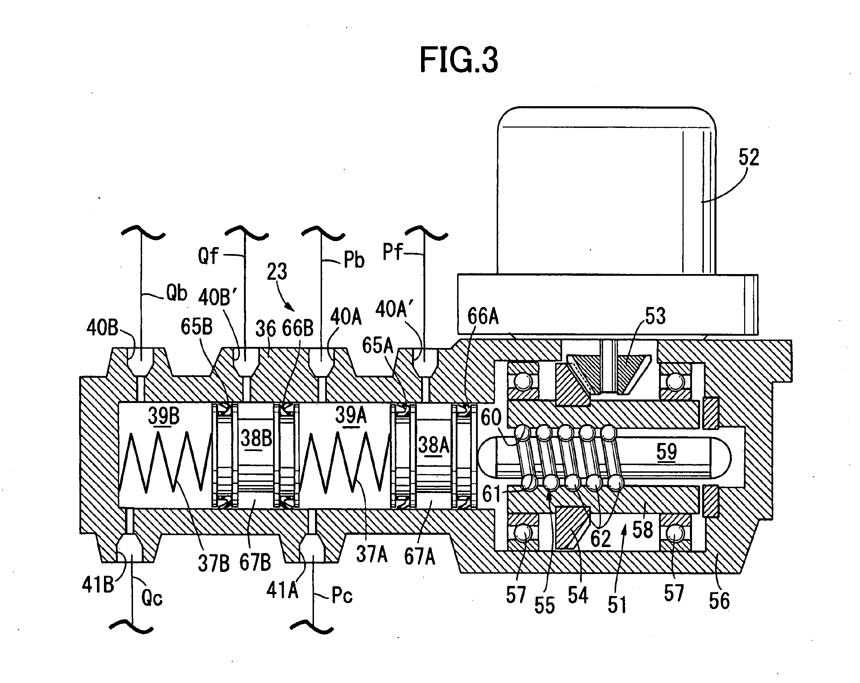

As shown in FIGS. 1 and 3, an actuator 51 of the slave cylinder 23 has a drive bevel gear 53 provided on the rotating shaft of an electric motor 52, a follower bevel gear 54 meshing with the drive bevel gear 53, and a ball screw mechanism 55 operated by the follower bevel gear 54. A sleeve 58 is rotatably supported in an actuator housing 56 via a pair of ball bearings 57. An output shaft 59 is coaxially arranged on an inner periphery of the sleeve 58. The follower bevel gear 54 is arranged on an outer periphery of the sleeve 58. The ball screw mechanism 55 comprises: a female thread 60 formed on the inner periphery of the sleeve 58; a male thread 61 formed on the outer periphery of the output shaft 59; and a plurality of balls 62 arranged between the female thread 60 and the male thread 61.

A pair of pistons 38A and 38B urged in a retreat direction by a pair of return springs 37A and 37B are slidably disposed in a cylinder body 36 of the slave cylinder 23. A pair of fluid pressure chambers 39A and 39B are defined on the front faces of the pistons 38A and 38B, respectively. A front end of the output shaft 59 abuts on a rear end of the rear piston 38A. One of the fluid pressure chamber 39A communicates with the fluid passages Pb, Pc via ports 40A, 41A, respectively, while the other fluid pressure chamber 39B communicates with the fluid passages Qb, Qc through ports 40B, 41B, respectively.

The rear piston 38A comprises a front cup seal 65A and a rear cup seal 66A. The port 40A leading to the fluid passage Pb is provided in a front portion of the rear fluid pressure chamber 39A. Even if the piston 38A advances to the advance limit, the front cup seal 65A never reaches the position of the port 40A. A fluid passage Pf branches from the fluid passage Pa provided upstream of the shutoff valve 22A, and communicates with a port 40A' of the cylinder body. The position of the port 40A' is set so that the port 40A' always faces a back chamber 67A provided between the front cup seal 65A and the rear cup seal 66A.

The front piston 38B comprises a front cup seal 65B and a rear cup seal 66B. The port 40B leading to the fluid passage Qb is provided in a front portion of the front fluid pressure chamber 39B. Even if the piston 38B advances to the advance limit, the front cup seal 65B never reaches the position of the port 40B. A fluid passage Qf branches from the fluid passage Qa provided upstream of the shutoff valve 22A, and communicates with a port 40B' of the cylinder body. The position of the port 40B' is set so that the port 40B' always faces a back chamber 67B provided between the front cup seal 65B and the rear cup seal 66B.

Referring again to FIG. 1, the structure of the ABS 24 is of a well-known type. The ABS 24 has two streams structurally identical to each other: a stream including the disc brake devices 14 and 15 for braking the left front wheel and the right rear wheel; and a stream for the disc brake devices 18 and 19 for braking the right front wheel and the left rear wheel. Of these streams, the stream for the disc brake devices 14 and 15 will be described as a representative. A pair of in-valves 42 comprising normally open solenoid valves are provided between the fluid passage Pc and the fluid passages Pd, Pe. A pair of out-valves 44 comprising normally closed solenoid valves are provided between the fluid passages Pd, Pe on the downstream side of the in-valves 42 and a reservoir 43. A fluid pressure pump 47 interposed between a pair of check valves 45 and 46 is provided between the reservoir 43 and the fluid passage Pc. The fluid pressure pump 47 is driven by an electric motor 48.

Connected to an electronic control unit (not shown) for controlling the operation of the shutoff valves 22A and 22B, the reaction force permission valve 25, the slave cylinder 23 and the ABS 24, are a fluid pressure sensor Sa for detecting the brake fluid pressure generated by the master cylinder 11, a fluid pressure sensor Sb for detecting the brake fluid pressure transmitted to the disc brake devices 18 and 19, and a vehicle wheel speed sensors Sc for detecting the vehicle wheel speeds of the vehicle wheels.

The operation of the exemplary embodiment of the present invention having the above-described arrangement will now be described.

Under normal operation of the system, the shutoff valves 22A and 22B, comprising normally open solenoid valves, are demagnetized so as to be in an open state, and the reaction force permission valve 25, comprising a normally closed solenoid valve, is magnetized so as to be in an open state. In this state, when the fluid pressure sensor Sa provided in the fluid passage Qa detects a pushing force on the brake pedal 12 by the driver, the actuator 51 of the slave cylinder 23 is operated. That is, when the electric motor 52 is driven in one direction, the output shaft 59 is advanced by the drive bevel gear 53, the follower bevel gear 54 and the ball screw mechanism 55, so that the pair of the pistons 38A and 38B urged by the output shaft 59 are advanced. At this time, the fluid passages Pb and Qb leading to the ports 40A and 40B are closed. Therefore, at the moment the pistons 38A and 38B begin to advance, a brake fluid pressure is generated in the fluid pressure chambers 39A and 39B. This brake fluid pressure is transmitted to the wheel cylinders 16, 17, 20, and 21 of the disc brake devices 14, 15, 18, and 19 through the opened in-valves 42 of the ABS 24, thereby braking the vehicle wheels.

As described above, the shutoff valves 22A and 22B are closed at the time of operation of the slave cylinder 23, and the ports 40A and 40B leading to the fluid passages Pb and Qb, respectively, are arranged at positions at which the ports 40A and 40B are not closed by the front cup seals 65A and 65B, whereby the brake fluid pressure is generated in the fluid pressure chambers 39A and 39B at the moment the pistons 38A and 38B begin to advance. Therefore, it is possible to minimize the stroke loss of the pistons 38A and 38B to improve the response in generating a braking force, without electrically controlling the stop positions of the pistons 38A and 38B each time the brake operation is performed.

According to the present invention, the brake fluid is reliably replenished in order to prevent the situation where the brake fluid may otherwise run short due to wear of the brake pad. The fluid passages Pa and Qa, leading to the reservoir via the master cylinder 11, always communicate with the back chambers 67A and 67B, respectively, in the rear of the front cup seals 65A and 65B of the pistons 38A and 38B of the slave cylinder 23, through the fluid passages Pf and Qf branching from the fluid passages Pa and Qa, respectively. Therefore, the brake fluid in the back chambers 67A and 67B moves forward to pass the front cup seals 65A and 65B, thereby replenishing the brake fluid.

Because the shutoff valves 22A and 22B are closed to block the communication of the fluid passages Pa and Qa with Pb and Qb, respectively, the brake fluid pressure generated by the master cylinder 11 is not transmitted to the disc brake devices 14, 15, 18, and 19. At this time, the brake fluid pressure generated in the other fluid pressure chamber 13B of the master cylinder 11 is transmitted to the fluid chamber 30 of the stroke simulator 26 through the opened reaction force permission valve 25 to move the piston 29 against the spring 28, thereby generating a pseudo pedal reaction force while permitting the stroke of the brake pedal 12 to eliminate an uncomfortable feeling to the driver.

The operation of the actuator 51 for the slave cylinder 23 is controlled so that the brake fluid pressure generated by the slave cylinder 23 and detected by the fluid pressure sensor Sb provided in the fluid passage Qc has a value corresponding to the brake fluid pressure generated by the master cylinder 11 and detected by the fluid pressure sensor Sa provided in the fluid passage Qa, thereby generating the braking force in the disc brake devices 14, 15, 18, and 19 according to the pushing force inputted to the brake pedal 12 by the driver.

If the slip ratio of any vehicle wheel is increased and a tendency of locking is detected based on the output from the wheel speed sensor Sc corresponding to the vehicle wheel during the above-described braking, the ABS 24 is operated in a state in which the slave cylinder 23 is maintained in the operating state, thereby preventing locking of the vehicle wheel.

That is, when any vehicle wheel has a tendency of locking, a pressure reducing operation is performed to release the brake fluid pressure in the wheel cylinder by opening the out-valve 44 in a state where the transmission of the brake fluid pressure from the slave cylinder 23 is shut off by closing the in-valve 42 communicating with the wheel cylinder; and a pressure maintaining operation is subsequently performed to maintain the brake fluid pressure in the wheel cylinder by closing the out-valve 44, thereby reducing the braking force to avoid locking of the vehicle wheel.

When the vehicle wheel speed is recovered to reduce the slip ratio, a pressure increasing operation is performed to increase the brake fluid pressure in the wheel cylinder by opening the in-valve 42, thereby increasing the braking force for braking the vehicle wheel. When the vehicle wheel again has a tendency of locking due to this pressure increasing operation, the above-described pressure reducing, maintaining and increasing operation is performed again. The operation is repeatedly performed to generate the maximum braking force while preventing locking of the vehicle wheels. The brake fluid flowing into the reservoir 43 during this process is returned by the fluid pressure pump 47 to the fluid passages Pc and Qc on the upstream side.

During the above-described ABS control, the shutoff valves 22A and 22B are maintained in the valve closed state, thereby preventing a fluid pressure fluctuation associated with the operation of the ABS 24 from being transmitted as a kickback from the master cylinder 11 to the brake pedal 12.

If the slave cylinder 23 becomes inoperable due to power failure or the like, the control is performed by the brake fluid pressure generated by the mater cylinder 11 in place of the brake fluid pressure generated by the slave cylinder 23.

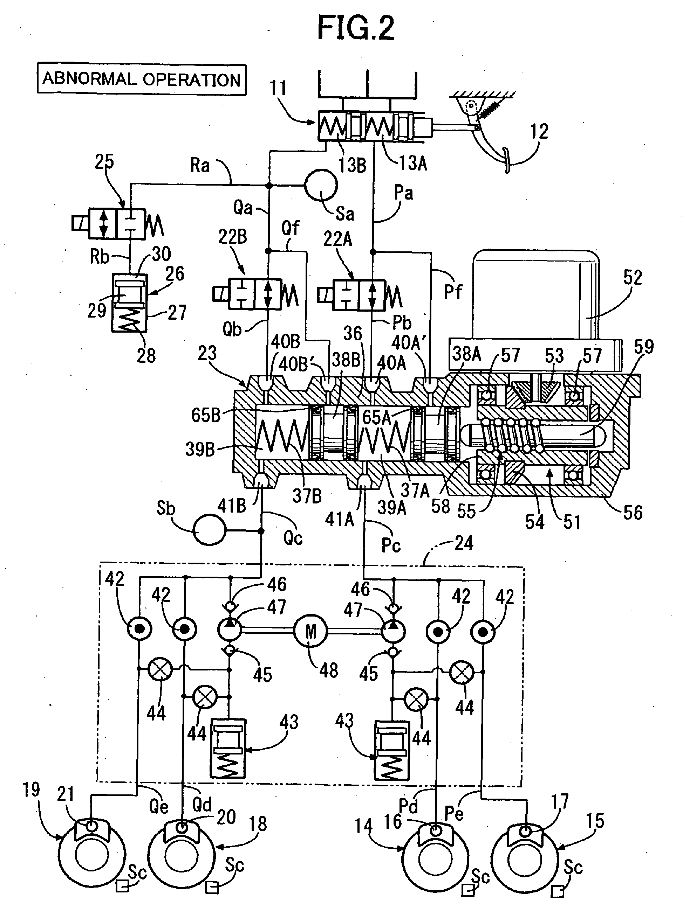

That is, in the event of power failure or the like, as shown in FIG. 2, the shutoff valves 22A and 22B, comprising normally open solenoid valves, remain open; the reaction force permission valve 25 comprising a normally closed solenoid valve is automatically closed; the in-valves 42, comprising normally open solenoid valves, are automatically opened; and the out-valves 44, comprising normally closed solenoid valves, are automatically closed. In this state, the brake fluid pressure generated in the fluid pressure chambers 13A and 13B of the master cylinder 11 passes the shutoff valves 22A and 22B, the fluid pressure chambers 39A and 39B of the slave cylinder 23 and the in-valves 42, without being absorbed by the stroke simulator 26; and operates the wheel cylinders 16, 17, 20, and 21 of the disc brake devices 14, 15, 18, and 19 for respectively braking the vehicle wheels, thus generating the braking force without any problem.

The exemplary embodiment of the present invention has been described above, but various changes in design may be made without departing from the subject matter of the present invention as laid down in the appended claims.

For example, the ball screw mechanism 55 is used in the actuator 51 for moving the output shaft 59 forward and rearward in the embodiment, but the structure of the actuator 51 is arbitrary.

## Claims

1. A brake system comprising:
a master cylinder (11) for generating a brake fluid pressure by braking operation by a driver;
a slave cylinder. (23) including an actuator (51) operated by an electric motor (52) for generating a brake fluid pressure, a cylinder body (36), a piston (38A, B) slidably fitted in the cylinder body (36) and driven to advance and retreat by the actuator (52), and a cup seal (65A, B) provided at a front end of the piston (38A, B) to generate the brake fluid pressure;
a wheel cylinder (16, 17, 20, 21) for braking a wheel using brake fluid pressure generated by the master cylinder (11) or the slave cylinder (23);
a first fluid passage (Pa, Qa, Pb, Qb) connecting the master cylinder (11) and the slave cylinder (23) to each other;
a shutoff valve (22A, B) which selectively shuts off communication of the first fluid passage (Pa, Qa, Pb, Qb); and
a second fluid passage (Pf, Qf) which branches from the first fluid passage (Pa, Qa, Pb, Qb) on a side of the master cylinder (11) with respect to the shutoff valve (22B), and communicates with the cylinder body (36) at a position in the rear of the cup seal (65A, B);
wherein the first fluid passage (Pa, Qa, Pb, Qb) communicates with the cylinder body (36) at a position in front of an advance limit of the cup seal (65A, B),
**characterized in that**
the slave cylinder (23) further comprises another cup seal (66A, B) provided at a rear end of the piston, a fluid chamber (67A, B) is defined around an intermediate portion of the piston (38A, B) between said cup seals (66A, B; 65A, B), and the second fluid passage (Pf, Qf) communicates with said fluid chamber (67A, B).

2. The brake system according to claim 1, wherein the brake system further comprises an anti-lock braking system (24) which is arranged between the slave cylinder (23) and a plurality of wheel cylinders (16, 17, 20, 21) and which can individually control a braking force generated by each of the wheel cylinders.

3. The brake system according to claim 2, wherein the shutoff valve (22A, B) is closed at least when the anti-lock braking system (24) operates.

4. The brake system according to claim 1, wherein the brake system further comprises a stroke simulator (26) communicating with the master cylinder (11) via a reaction force permission valve (25) which is opened when operation of the slave cylinder (23) is normal and closed when the operation of the slave cylinder (23) is abnormal.

5. The brake system according to claim 1, 2 or 4, wherein the shutoff valve (22A, B) is a normally opened solenoid valve which is closed when operation of the slave cylinder (23) is normal and opened when the operation of the slave cylinder (23) is abnormal.

6. The brake system according to claim 1, wherein brake fluid in said fluid chamber (67A, B) can flow through said second fluid passage (Pf, Qf) into said first fluid passage (Pa, Qa, Pb, Qb) when needed.

## Patentansprüche

1. Bremssystem, umfassend:
einen Hauptzylinder (11) zum Erzeugen eines Bremsfluiddrucks durch Bremsbetätigung durch einen Fahrer;
einen Folgezylinder (23), der einen Aktuator (51), der von einem Elektromotor (52) zum Erzeugen eines Bremsfluiddrucks betätigt wird, einen Zylinderkörper (36), einen Kolben (38A, B), der in den Zylinderkörper (36) verschiebbar eingesetzt ist und durch den Aktuator (52) zum Ausfahren und Einfahren angetrieben ist, sowie eine Manschettendichtung (65A, B), die am Vorderende des Kolbens (38A, B) zum Erzeugen des Bremsfluiddrucks vorgesehen ist, enthält;
einen Radzylinder (16, 17, 20, 21) zum Bremsen eines Rads mittels des Bremsfluiddrucks, der von dem Hauptzylinder (11) oder dem Folgezylinder (23) erzeugt ist;
einen ersten Fluidkanal (Pa, Qa, Pb, Qb), der den Hauptzylinder (11) mit dem Folgezylinder (23) verbindet;
ein Absperrventil (22A, B), das die Verbindung des ersten Fluidkanals (Pa, Qa, Pb, Qb) selektiv unterbricht; und
einen zweiten Fluidkanal (Pf, Qf), der von dem ersten Fluidkanal (Pa, Qa, Pb, Qb) an einer Seite des Hauptzylinders (11) im Bezug auf das Absperrventil (22B) abzweigt und an einer Position hinter der Manschettendichtung (56A, B) mit dem Zylinderkörper (36) in Verbindung steht;
worin der erste Fluidkanal (Pa, Qa, Pb, Qb) an einer Position vor einer Ausfahrgrenze der Manschettendichtung (65A, B) mit dem Zylinderkörper (36) in Verbindung steht,
**dadurch gekennzeichnet, dass** der Folgezylinder (23) ferner eine andere Manschettendichtung (66A, B) aufweist, die am Hinterende des Kolbens vorgesehen ist, eine Fluidkammer (67A, B) um einen
zwischenliegenden Abschnitt des Kolbens (38A, B) zwischen den Manschettendichtungen (66A, B; 65A, B) definiert ist und der zweite Fluidkanal (Pf, Qf) mit der Fluidkammer (67A, B) in Verbindung steht.

2. Bremssystem nach Anspruch 1, wobei das Bremssystem ferner ein Antiblockiersystem (24) aufweist, das zwischen dem Folgezylinder (23) und einer Mehrzahl von Radzylindern (16, 17, 20, 21) angeordnet ist und das die von jedem der Radzylinder erzeugte Bremskraft individuell regeln kann.

3. Bremssystem nach Anspruch 2, worin das Absperrventil (22A, B) zumindest dann geschlossen ist, wenn das Antiblockiersystem (24) arbeitet.

4. Bremssystem nach Anspruch 1, worin das Bremssystem ferner einen Hubsimulator (26) aufweist, der mit dem Hauptzylinder (11) über ein Reaktionskraftfreigabeventil (25) in Verbindung steht, das geöffnet ist, wenn der Betrieb des Folgezylinders (22) normal ist, und geschlossen ist, wenn der Betrieb des Folgezylinders (23) abnormal ist.

5. Bremssystem nach Anspruch 1, 2 oder 4, worin das Absperrventil (22A, B) ein normalerweise geöffnetes Solenoidventil ist, das geschlossen ist, wenn der Betrieb des Folgezylinders (23) normal ist, und geöffnet ist, wenn der Betrieb des Folgezylinders (23) abnormal ist.

6. Bremssystem nach Anspruch 1, worin das Bremsfluid in der Fluidkammer (67A, B) bei Bedarf durch den zweiten Fluidkanal (Pf, Qf) in den ersten Fluidkanal (Pa, Qa, Pb, Qb) fließen kann.

## Revendications

1. Système de freinage comprenant :
un maître-cylindre (11) pour générer une pression du liquide de frein par une opération de freinage effectuée par un conducteur ;
un cylindre secondaire (23) comprenant un mécanisme de commande (51) actionné par un moteur électrique (52) pour générer une pression du liquide de frein, un corps de cylindre (36), un piston (38A, B) ajusté de façon à pouvoir coulisser dans le corps de cylindre (36) et entraîné pour avancer et se retirer par le mécanisme de commande (52), et un joint calotte (65A, B) prévu à une extrémité avant du piston (38A, B) pour générer la pression du liquide de frein ;
un cylindre de roue (16, 17, 20, 21) pour freiner une roue utilisant la pression du liquide de frein générée par le maître-cylindre (11) ou le cylindre secondaire (23) ;
un premier passage de fluide (Pa, Qa, Pb, Qb) reliant le maître-cylindre (11) et le cylindre secondaire (23) l'un à l'autre ;
une soupape d'arrêt (22A, B) qui arrête de façon sélective la communication du premier passage de liquide (Pa, Qa, Pb, Qb) ; et
un deuxième passage de fluide (Pf, Qf) qui se subdivise du premier passage de liquide (Pa, Qa, Pb, Qb) du côté du maître-cylindre (11) par rapport à la soupape d'arrêt (22B) et communique avec le corps de cylindre (36) à une position située à l'arrière du joint calotte (65A, B) ;
dans lequel le premier passage de liquide (Pa, Qa, Pb, Qb) communique avec le corps de cylindre (36) à une position en face d'une limite avancée du joint calotte (65A, B),
**caractérisé en ce que** le cylindre secondaire (23) comprend en outre un autre joint calotte (66A, B) prévu à une extrémité arrière du piston, une chambre de liquide (67A, B) est définie autour d'une portion intermédiaire du piston (38A, B) entre lesdits joints calottes (66A, B ; 65A, B) et le deuxième passage de liquide (Pf, Qf) communique avec ladite chambre de liquide (67A, B).

2. Système de freinage selon la revendication 1, dans lequel le système de freinage comprend en outre un système de freinage antiblocage (24) qui est agencé entre le cylindre secondaire (23) et une pluralité de cylindres de roue (16, 17, 20, 21) et qui peut commander individuellement une force de freinage générée par chacun des cylindres de roue.

3. Système de freinage selon la revendication 2, dans lequel la soupape d'arrêt (22A, B) est fermée au moins lorsque le système de freinage antiblocage (24) fonctionne.

4. Système de freinage selon la revendication 1, dans lequel le système de freinage comprend en outre un stimulateur de course (26) qui communique avec le maître-cylindre (11) par l'intermédiaire d'une soupape d'autorisation de force de réaction (25) qui est ouverte lorsque le fonctionnement du cylindre secondaire (23) est normal et fermée lorsque le fonctionnement du cylindre secondaire (23) est anormal.

5. Système de freinage selon la revendication 1, 2 ou 4, dans lequel la soupape d'arrêt (22A, B) est une soupape électromagnétique normalement ouverte qui est fermée lorsque le fonctionnement du cylindre secondaire (23) est normal et ouverte lorsque le fonctionnement du cylindre secondaire (23) est anormal.

6. Système de freinage selon la revendication 1, dans lequel le liquide de frein dans ladite chambre de liquide (67A, B) peut s'écouler à travers ledit deuxième passage de liquide (Pf, Qf) dans ledit premier passage de liquide (Pa, Qa, Pb, Qb) si nécessaire.
